(19) Europäisches Patentamt
European Patent Office
Office européen des brevets

(11) **EP 3 640 490 B1**

(12) **FASCICULE DE BREVET EUROPEEN**

(45) Date de publication et mention
de la délivrance du brevet:
**23.06.2021 Bulletin 2021/25**

(51) Int Cl.:
***F16C 33/78*** *(2006.01)*     ***F16C 33/38*** *(2006.01)*
***F16C 33/10*** *(2006.01)*     *F16C 19/06* *(2006.01)*
*F16C 33/60* *(2006.01)*     *F16C 33/66* *(2006.01)*
*F16C 33/80* *(2006.01)*     *F16C 33/58* *(2006.01)*

(21) Numéro de dépôt: **19202407.3**

(22) Date de dépôt: **10.10.2019**

(54) **PALIER À ROULEMENT**

WÄLZLAGER

ROLLER BEARING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.10.2018 FR 1859570**

(43) Date de publication de la demande:
**22.04.2020 Bulletin 2020/17**

(73) Titulaire: **NTN-SNR ROULEMENTS
74000 Annecy (FR)**

(72) Inventeur: **REDOUTEY, Louis
73410 Entrelacs (FR)**

(74) Mandataire: **Sayettat, Julien Christian
Strato-IP
63, Boulevard de Ménilmontant
75011 Paris (FR)**

(56) Documents cités:
**FR-A1- 2 925 943**     **JP-A- 2014 005 913**
**US-A- 3 554 621**     **US-A1- 2015 093 060**

**Description**

L'invention concerne un palier à roulement comprenant une bague extérieure et une bague intérieure délimitant entre elles un espace de roulement dans lequel des corps roulants sont disposés pour permettre la rotation relative desdites bagues.

Elle s'applique en particulier à un palier à roulement pour le montage en rotation du rotor d'un moteur électrique, notamment dans le domaine des véhicules automobiles, la bague intérieure étant solidaire en rotation dudit rotor, notamment en étant emmanchée autour d'un moyeu associé audit rotor, et la bague extérieure étant fixée à une structure.

On connaît des paliers à roulement dont chaque bague présente deux faces latérales respectivement gauche et droite qui s'étendent radialement en étant reliées par une paroi axiale, les faces gauches - respectivement droites - étant séparées par une ouverture gauche - respectivement droite - de l'espace de roulement.

En outre, de tels paliers à roulement peuvent comprendre au moins une cage avec un corps annulaire qui est pourvu de logements dans lequel les corps roulants sont disposés pour assurer leur guidage en rotation.

En particulier, ces paliers à roulement peuvent être lubrifiés par un flux de lubrifiant provenant de l'extérieur, notamment contenu dans un carter dans lequel le palier est disposé. Ainsi, en fonctionnement, le flux de lubrifiant alimente l'espace de roulement formé entre les bagues, afin d'assurer la durée de vie du roulement.

Dans le cadre d'une telle lubrification, il est connu d'utiliser une cage de rétention dont le corps présente au moins un bord sensiblement axial sur lequel est formée une lèvre annulaire qui s'étend sensiblement radialement, ladite lèvre formant un déflecteur pour la circulation de lubrifiant entre l'espace de roulement et l'extérieur.

Le document FR-2 883 942 décrit un tel palier à roulement, dans lequel les lèvres du déflecteur sont agencées pour filtrer le lubrifiant entrant dans l'espace de roulement, notamment en étant disposées en regard d'un embrèvement annulaire formé dans une face latérale de la bague correspondante.

Un tel agencement, s'il est particulièrement avantageux pour une boîte de vitesses, n'est en revanche pas bien adapté pour une application de type moteur électrique, notamment compte tenu de la vitesse de rotation élevée. En effet, la disposition de la lèvre dans l'embrèvement génère des turbulences dans le flux de lubrifiant, ce qui ne permet pas de garantir une lubrification optimale de l'espace de roulement.

Le document JP 2014 005913 A montre un palier à roulement comprenant une bague comme décrite dans le préambule de la revendication 1.

L'invention a pour but de perfectionner l'art antérieur en proposant notamment un palier à roulement dans lequel le flux de lubrifiant peut être maîtrisé de façon optimale, en particulier à haute vitesse de rotation, et ce sans impacter significativement sa compacité axiale.

A cet effet, l'invention propose un palier à roulement comprenant une bague extérieure et une bague intérieure délimitant entre elles un espace de roulement dans lequel des corps roulants sont disposés pour permettre la rotation relative desdites bagues, chacune desdites bagues présentant une face latérale gauche et une face latérale droite s'étendant radialement en étant reliées par une paroi axiale, les faces gauches - respectivement droites - étant séparées par une ouverture gauche - respectivement droite - de l'espace de roulement, ledit palier comprenant en outre au moins une cage comprenant un corps annulaire qui est pourvu de logements dans lesquels les corps roulants sont disposés pour assurer leur guidage en rotation, ledit corps présentant au moins un bord sensiblement axial sur lequel est formée une lèvre annulaire qui s'étend sensiblement radialement, le bord étant disposé dans une ouverture en formant un jeu $J_a$ avec une paroi axiale délimitant ladite ouverture de sorte à former un conduit annulaire interne de section $S_a$, la lèvre étant disposée en regard d'une face en formant un jeu $J_b$ de sorte à former un conduit annulaire externe de section $S_b$, ledit conduit annulaire externe s'étendant depuis le conduit annulaire interne jusqu'à un passage pour former un chemin de communication de l'espace de roulement avec l'extérieur, ledit passage débouchant radialement le long de la face jusqu'à la paroi axiale.

D'autres objets et avantages de l'invention apparaîtront dans la description qui suit, faite en référence aux figures annexées, dans lesquelles :

- la figure 1 est une vue partielle en coupe longitudinale d'un palier à roulement selon un mode de réalisation de l'invention ;
- la figure 2 est une vue agrandie de la figure 1 centrée sur l'interférence entre le bord extérieur gauche d'une cage et la face latérale gauche de la bague extérieure.

En relation avec ces figures, on décrit ci-dessous un palier à roulement, en particulier pour le montage en rotation du rotor d'un moteur électrique.

Le palier comprend une bague intérieure 1 et une bague extérieure 2 délimitant entre elles un espace de roulement dans lequel des corps roulants (non représentés) sont disposés pour permettre la rotation relative desdites bagues autour d'un axe.

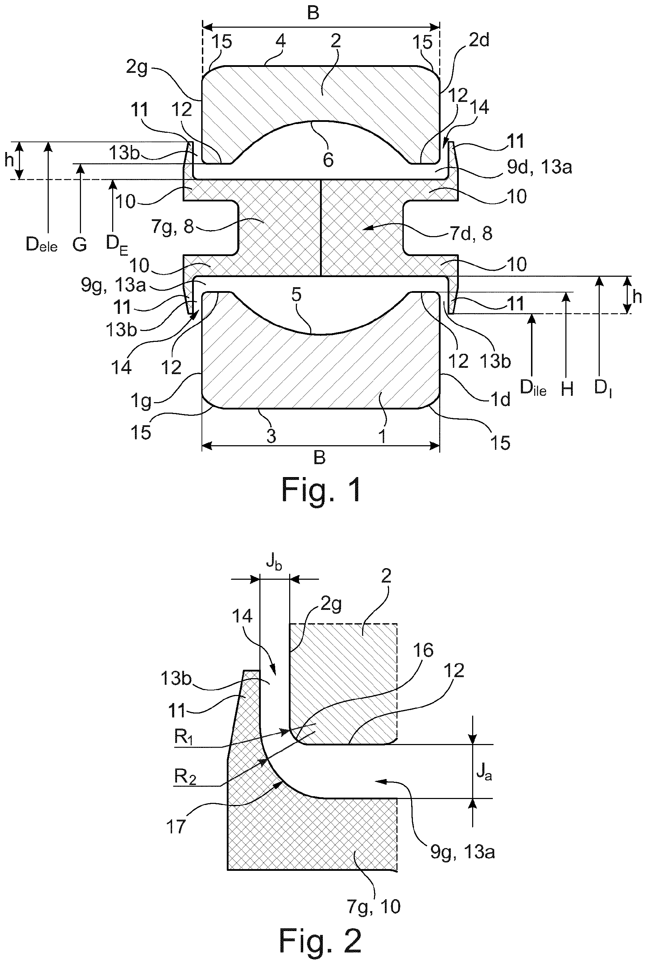

Dans cette description, les termes de positionnement dans l'espace sont pris en référence à l'axe de rotation du palier (horizontal sur les figures 1 et 2). En particulier, le terme « intérieur » est relatif à une disposition proche de cet axe et le terme « extérieur » est relatif à une disposition à distance de cet axe. En outre, les termes « gauche » et « droit(e) » sont définis par rapport à la disposition du palier à roulement sur la figure 1.

Dans une application préférentielle, le palier à roulement est utilisé pour le montage en rotation du rotor d'un moteur électrique, la bague intérieure 1 étant solidaire en rotation dudit rotor, notamment en étant emmanchée autour d'un moyeu associé audit rotor (non représenté), et la bague extérieure 2 étant fixée à une structure.

La bague intérieure 1 présente une piste de roulement extérieure 5. De même, la bague extérieure 2 est montée autour de la bague intérieure 1 en présentant une piste de roulement intérieure 6 qui est disposée en regard radial de la piste de roulement extérieure 5, les pistes 5, 6 formant entre elles un chemin de roulement pour une rangée de corps roulants, par exemple sous forme de billes.

Toutefois, l'invention n'est pas limitée à un mode de réalisation particulier de la géométrie du palier, en particulier relativement aux géométries des corps roulants et/ou des bagues 1, 2.

Le palier comprend en outre au moins une cage 7g, 7d comprenant un corps annulaire 8 qui est pourvu de logements dans lesquels les corps roulants sont disposés pour assurer leur guidage en rotation.

De façon avantageuse, les logements sont équirépartis angulairement le long de la circonférence du corps annulaire 8, afin d'équirépartir les corps roulants dans l'espace de roulement.

Dans le mode de réalisation représenté, le palier comprend deux cages respectivement gauche 7g et droite 7d qui sont assemblées l'une à l'autre dans l'espace de roulement de manière à disposer leurs logements respectifs en regard axial deux à deux, un corps roulant étant disposé dans chaque paire de logements ainsi formée.

De façon avantageuse, les deux cages 7g, 7d présentent une géométrie identique, ce qui permet de faciliter leur fabrication, notamment par moulage, et ainsi de faciliter la réalisation du palier à roulement.

Chaque bague 1, 2 présente une face latérale gauche 1g, 2g et une face latérale droite 1d, 2d s'étendant radialement en étant reliées par une paroi axiale 3, 4, notamment :

- pour la bague intérieure 1, la paroi axiale intérieure 3 d'association au rotor du moteur électrique ; et
- pour la bague extérieure 2, la paroi axiale extérieure 4 d'association à une structure fixe du véhicule automobile.

En outre, les faces gauches 1g, 2g - respectivement droites 1d, 2d - sont séparées par une ouverture gauche 9g - respectivement droite 9d - de l'espace de roulement, lesdites ouvertures mettant en communication ledit espace de roulement avec l'extérieur, notamment pour permettre la circulation dans ledit espace de roulement de lubrifiant.

Pour contrôler la circulation de lubrifiant entre l'espace de roulement et l'extérieur, le corps annulaire 8 d'au moins une cage 7g, 7d présente au moins un bord 10 sensiblement axial sur lequel est formée une lèvre annulaire 11 qui s'étend sensiblement radialement.

En particulier, le bord 10 est disposé dans une ouverture 9g, 9d en formant un jeu $J_a$ avec une paroi axiale 12 délimitant ladite ouverture, de sorte à former un conduit annulaire interne 13a de section $S_a$, la lèvre 11 étant disposée en regard d'une face latérale 1g, 1d, 2g, 2d en formant un jeu $J_b$ de sorte à former un conduit annulaire externe 13b de section $S_b$ qui s'étend depuis ledit conduit annulaire interne jusqu'à un passage 14 pour former un chemin de communication de l'espace de roulement avec l'extérieur, ledit passage débouchant radialement le long de la face 1g, 1d, 2g, 2d jusqu'à la paroi axiale 3, 4.

En particulier, le chemin de roulement est dépourvu d'obstacles radiaux au moins jusqu'à la paroi axiale 3, 4, le flux de lubrifiant entrant ou sortant du passage 14 pouvant s'écouler librement de long de la face radiale 1g, 1d, 2g, 2d correspondante. Ainsi, on forme un chemin de communication continu entre l'espace de roulement et l'extérieur dans lequel les turbulences sont minimisées, ce qui permet de mieux maîtriser le flux de lubrifiant circulant au travers du palier, notamment lorsque la vitesse de rotation du palier à roulement est élevée.

Dans le mode de réalisation représenté, les deux cages 7g, 7d forment chacune au moins un chemin de communication respectivement gauche et droit, notamment deux chemins de communication gauches respectivement extérieur et intérieur (pour la cage gauche 7g) et deux chemins de communication droits respectivement extérieur et intérieur (pour la cage droite 7d).

Pour ce faire, le corps annulaire 8 de la cage gauche 7g présente deux bords 10 gauches respectivement extérieur et intérieur disposés chacun en regard radial d'une paroi axiale 12 délimitant l'ouverture gauche 9g et formée sur respectivement la bague extérieure 2 et la bague intérieure 1.

Chaque bord gauche 10 porte une lèvre gauche 11 respectivement extérieure et intérieure qui est disposée en regard axial de la face latérale gauche 1g, 2g de respectivement la bague intérieure 1 et la bague extérieure 2 et, afin de former deux chemins de communication gauches respectivement extérieur et intérieur.

De même, le corps annulaire 8 de la cage droite 7d présente deux bords 10 droits respectivement extérieur et intérieur disposés chacun en regard radial d'une paroi axiale 12 délimitant l'ouverture droite 9d et formée sur respectivement la bague extérieure 2 et la bague intérieure 1, chaque bord droit 10 portant une lèvre droite 11 respectivement extérieure et intérieure qui est disposée en regard axial de la face latérale droite 1d, 2d de respectivement la bague intérieure 1 et la bague extérieure 2, afin de former deux chemins de communication droits respectivement extérieur et intérieur.

Pour fluidifier la circulation du lubrifiant dans les chemins de communication, les parois axiales 12 délimitant les ouvertures 9g, 9d s'étendent chacune depuis une face latérale 1g, 1d, 2g, 2d vers une piste de roulement 5, 6 formée sur la bague correspondante 1, 2, et ce notamment sans obstacle à l'entrée du chemin de communication correspondant.

De même, les faces gauche 1g, 2g et droite 1d, 2d de chaque bague 1, 2 sont reliées à la paroi axiale 3, 4 correspondante par un coude 15 formé par un rayon de raccordement.

De façon avantageuse, les bagues 1, 2 et les cages 7g, 7d présentent des agencements dimensionnels agencés pour obtenir des valeurs sensiblement identiques pour les jeux $J_a$, $J_b$ et/ou les sections $S_a$, $S_b$, et ainsi de contrôler de façon homogène les flux de lubrifiants dans chacun des chemins de communication.

En particulier, les bagues 1, 2 peuvent présenter des épaisseurs axiales B sensiblement identiques, afin de permettre un alignement radial entre leurs faces latérales gauches 1g, 2g et droites 1d, 2d.

Le jeu radial $J_a$ formé entre un bord 10 et une paroi axiale 12 est agencé pour limiter le risque de contact entre la cage 7g, 7d et la bague 1, 2 correspondantes, ceci en tenant compte des tolérances dimensionnelles et géométriques relatives à l'encombrement du palier, ainsi que des déformations potentielles en application dudit palier, notamment dues à une dilatation thermique.

Pour ce faire, le jeu $J_a$ peut être défini par au moins l'une des relations suivantes :

- pour un chemin de communication intérieur :

$$D_I = H + 2J_a$$

- pour un chemin de communication extérieur :

$$D_E = G - 2J_a$$

dans lesquelles :

- Di est le diamètre défini par le bord intérieur 10 d'une cage 7g, 7d ;
- $D_E$ est le diamètre défini par le bord extérieur 10 d'une cage 7g, 7d ;
- G est le diamètre défini par une paroi axiale 12 délimitant une ouverture 9g, 9d formée sur la bague extérieure 2 ; et
- H est le diamètre défini par une paroi axiale 12 délimitant une ouverture 9g, 9d formée sur la bague intérieure 1.

De façon avantageuse, les dimensions $D_I$, $D_E$, G, H peuvent être identiques pour les deux côtés gauche et droit de l'ensemble de cages 7g, 7d et des bagues 1, 2, et le palier peut être agencé pour présenter un jeu radial Ja identique au niveau de chaque chemin de roulement.

Les diamètres G, H des bagues 1, 2 peuvent être définis suivant des règles de conception standard pour les paliers à roulement, notamment en vue d'une amélioration de la durée de vie desdits paliers.

En particulier, le jeu $J_a$ peut être au moins égal à 0,5 mm.

Une fois le jeu $J_a$ ainsi déterminé, il est possible de calculer la section $S_a$ du conduit annulaire interne 13a du chemin de communication correspondant. La section $S_a$ peut être définie par au moins l'une des relations suivantes :

- pour un chemin de communication intérieur :

$$S_a = \frac{\pi}{4}\left(D_I^2 - H^2\right)$$

- pour un chemin de communication extérieur :

$$S_a = \frac{\pi}{4}\left(G^2 - D_E^2\right)$$

En particulier, les lèvres 11 extérieures et intérieures définissent chacune un diamètre $D_{ile}$, $D_{ele}$ selon les

équations suivantes :

$$D_{ile} = H - h$$

$$D_{ele} = G + h$$

dans lesquelles h correspond à la hauteur radiale de la lèvre 11 correspondante.

De façon avantageuse, les lèvres 11 présentent une hauteur radiale h de l'ordre de 2 mm, une telle valeur permettant d'assurer une limitation effective des flux de lubrifiant entrant dans l'espace de roulement tout en maintenant sur la face latérale correspondante 1g, 1d, 2g, 2d une hauteur radiale qui est suffisante pour recevoir les outillages de montage du palier.

A partir de ces diamètres $D_{ile}$, $D_{ele}$, pour le chemin de communication correspondant, on peut définir la section $S_b$ du conduit annulaire externe 13b selon l'une des équations suivantes :

- pour un chemin de communication intérieur :

$$S_b = \pi * D_{ile} * J_b$$

- pour un chemin de communication extérieur :

$$S_b = \pi * D_{ele} * J_b$$

Les diamètres $D_{ile}$, $D_{ele}$ peuvent être identiques pour chaque cage 7g, 7d, et les dimensions $J_b$, $S_b$ peuvent être identiques pour tous les chemins de communication.

Le jeu axial $J_b$ entre une lèvre 11 et la face latérale 1g, 1d, 2g, 2d correspondante présente une dimension adaptée pour pouvoir former un passage 14 suffisamment grand pour les flux de lubrifiant tout en tenant compte des tolérances géométriques pour la bague 1, 2 et la cage 7g, 7d correspondantes.

Pour ce faire, une dimension minimale $J_{bmin}$ pour le jeu $J_b$ peut être calculée en fonction de la largeur axiale B de la bague 1, 2 correspondante, l'écart numérique toléré $\Delta B$ pour ladite largeur axiale, la tolérance de symétrie SYM de ladite bague, le demi-jeu axial maximal $J_{max}$ du palier à roulement, la position Pos de la lèvre 11 correspondante et l'écart numérique toléré $\Delta Pos$ pour ladite position, notamment à partir de la formule suivante :

$$J_b min = Pos - \frac{\Delta Pos}{2} - \frac{1}{2}\left(B + \frac{\Delta B}{2} + SYM\right) - \frac{Jmax}{2}$$

En particulier, le jeu axial $J_b$ peut être au moins égal à 0,15 mm.

En outre, une valeur trop faible du jeu axial $J_b$ peut être compensée en ajustant :

- au moins l'une des tolérances $\Delta B$, SYM, $J_{max}$, $\Delta Pos$ susmentionnées ; et/ou
- la valeur du jeu radial $J_a$, notamment en adaptant les diamètres $D_I$, $D_E$ définis par la cage 7g, 7d correspondante.

Pour fluidifier la circulation du flux de lubrifiant dans un chemin de communication, la section $S_b$ du conduit annulaire externe 13b peut notamment être comprise entre 60% et 140% de la section $S_a$ du conduit annulaire interne 13a.

De façon particulièrement avantageuse, la section $S_b$ du conduit annulaire externe 13b est sensiblement égale à la section $S_a$ du conduit annulaire interne 13a, ce qui permet de limiter la perte de charge et donc la survenance de turbulences dans le flux de lubrifiant entre lesdits conduits.

Dans ce cas, il est notamment possible de calculer la valeur du jeu axial externe $J_b$ en fonction de la section interne $S_a$, à partir d'au moins une des équations suivantes :

- pour un chemin de communication intérieur :

$$J_b = \frac{S_a}{\pi * D_{ile}}$$

- pour un chemin de communication extérieur :

$$J_b = \frac{S_a}{\pi * D_{ele}}$$

Pour fluidifier le passage du flux de lubrifiant entre les conduits 13a, 13b d'un chemin de communication, la paroi axiale 12 dudit chemin peut être reliée à la face latérale 1g, 1d, 2g, 2d correspondante par un coude 16 formé par un rayon de raccordement $R_1$, la lèvre 11 étant reliée au bord de cage 10 correspondant par un coude 17 formé par un rayon de raccordement $R_2$ qui est tel que :

$$R_2 = R_1 + J_a - x$$

En particulier, le choix du coefficient x permet d'agir sur les deux paramètres suivants :

- la progressivité de la transition entre les conduits 13a, 13d. En effet, plus la valeur de x est importante, plus cette transition est franche, ce qui risque de générer des turbulences dans le flux de lubrifiant ;
- la canalisation du flux de lubrifiant entre un conduit 13a, 13b et le début de cette transition. En effet, avant de changer de direction, un flux de lubrifiant peut subir une légère restriction du fait du rétrécissement de diamètre au niveau de la transition, ladite restriction pouvant être compensée en choisissant pour le coefficient x une valeur permettant d'abaisser radialement la base du rayon $R_2$ par rapport à la base du rayon $R_1$.

Selon une réalisation, le coefficient x est compris entre 0,05 et 0,3, et notamment entre 0,15 et 0,2. En particulier, sur la figure 2, le coefficient x présente une valeur numérique de l'ordre de 0,17.

## Revendications

1. Palier à roulement comprenant une bague extérieure (2) et une bague intérieure (1) délimitant entre elles un espace de roulement dans lequel des corps roulants sont disposés pour permettre la rotation relative desdites bagues, chacune desdites bagues présentant une face externe latérale gauche (1g, 2g) et une face externe latérale droite (1d, 2d) s'étendant radialement en étant reliées par une paroi axiale externe (3, 4), les faces gauches (1g, 2g) - respectivement droites (1d, 2d) - étant séparées par une ouverture gauche (9g) - respectivement droite (9d) - de l'espace de roulement, ledit palier comprenant en outre au moins une cage (7g, 7d) comprenant un corps annulaire (8) qui est pourvu de logements dans lesquels les corps roulants sont disposés pour assurer leur guidage en rotation, ledit corps présentant au moins un bord (10) sensiblement axial sur lequel est formée une lèvre annulaire (11) qui s'étend sensiblement radialement, ledit palier étant **caractérisé en ce que** le bord (10) est disposé dans une ouverture (9g, 9d) en formant un jeu ($J_a$) avec une paroi axiale interne (12) desdites bagues délimitant ladite ouverture de sorte à former un conduit annulaire interne (13a) de section $S_a$, la lèvre (11) étant disposée en regard d'une face externe latérale (1g, 1d, 2g, 2d) en formant un jeu ($J_b$) de sorte à former un conduit annulaire externe (13b) de section $S_b$, ledit conduit annulaire externe s'étendant depuis le conduit annulaire interne jusqu'à un passage (14) pour former un chemin de communication de l'espace de roulement avec l'extérieur, ledit passage débouchant radialement le long de la face externe latérale (1g, 1d, 2g, 2d) jusqu'à la paroi axiale (3, 4).

2. Palier à roulement selon la revendication 1, **caractérisé en ce que** les faces externes latérales gauche (1g, 2g) et droite (1d, 2d) d'une bague (1, 2) sont reliées à la paroi axiale externe (3, 4) par un coude (15) formé par un rayon de raccordement.

3. Palier à roulement selon l'une des revendications 1 ou 2, **caractérisé en ce que** la paroi axiale interne (12) délimitant l'ouverture (9g, 9d) s'étend depuis une face externe latérale (1g, 1d, 2g, 2d) vers une piste de roulement (5, 6) formée sur la bague (1, 2) correspondante.

**4.** Palier à roulement selon l'une quelconque des revendications 1 à 3, **caractérisé en ce que** le corps (8) présente deux bords (10) respectivement intérieur et extérieur disposés tous deux dans chaque ouverture (9g, 9d) en étant chacun en regard radial d'une paroi axiale interne (12) délimitant ladite ouverture, et sur chacun desquels est formée une lèvre annulaire (11) pour former deux chemins de communication respectivement intérieur et extérieur.

**5.** Palier à roulement selon l'une quelconque des revendications 1 à 4, **caractérisé en ce qu'**il comprend deux cages respectivement gauche (7g) et droite (7d) formant chacune au moins un chemin de communication respectivement gauche et droit.

**6.** Palier à roulement selon l'une quelconque des revendications 1 à 5, **caractérisé en ce que** le jeu ($J_a$) est au moins égal à 0,5 mm.

**7.** Palier à roulement selon l'une quelconque des revendications 1 à 6, **caractérisé en ce que** le jeu ($J_b$) est au moins égal à 0,15 mm.

**8.** Palier à roulement selon l'une quelconque des revendications 1 à 7, **caractérisé en ce que** la lèvre (11) présente une hauteur radiale (h) qui est de l'ordre de 2 mm.

**9.** Palier à roulement selon l'une quelconque des revendications 1 à 8, **caractérisé en ce que** la section $S_b$ du conduit annulaire externe (13b) est comprise entre 60% et 140% de la section Sa du conduit annulaire interne (13a).

**10.** Palier à roulement selon la revendication 9, **caractérisé en ce que** la section $S_b$ du conduit annulaire externe (13b) est sensiblement égale à la section Sa du conduit annulaire interne (13a).

**11.** Palier à roulement selon l'une quelconque des revendications 1 à 10, **caractérisé en ce que** la paroi axiale interne (12) est reliée à la face externe latérale (1g, 1d, 2g, 2d) par un coude (16) formé par un rayon de raccordement ($R_1$), la lèvre (11) étant reliée au bord par un coude (17) formé par un rayon de raccordement ($R_2$) qui est tel que : $R_2 = R_1 + J_a - x$ ; x étant compris entre 0,05 et 0,3.

**12.** Palier à roulement selon la revendication 11, **caractérisé en ce que** x est compris entre 0,15 et 0,2.


**Patentansprüche**

**1.** Wälzlager, umfassend einen äußeren Ring (2) und einen inneren Ring (1), die zwischen sich einen Wälzraum begrenzen, in dem Wälzkörper angeordnet sind, um die relative Rotation der Ringe zu erlauben, wobei jeder der Ringe eine linke Seitenfläche (1g, 2g) und eine rechte Seitenfläche (1d, 2d) aufweist, die sich radial erstrecken, indem sie durch eine äußere axiale Wand (3, 4) verbunden sind, wobei die linken Flächen (1g, 2g) - beziehungsweise rechten (1d, 2d) - durch eine linke Öffnung (9g) - beziehungsweise rechte (9d) - des Wälzraums verbunden sind, wobei das Lager ferner mindestens einen Käfig (7g, 7d) umfasst, der einen ringförmigen Körper (8) umfasst, der mit Aufnahmen versehen ist, in denen die Wälzkörper angeordnet sind, um deren rotatorische Führung sicherzustellen, wobei der Körper mindestens einen etwa axialen Rand (10) aufweist, auf dem eine ringförmige Lippe (11) ausgebildet ist, die sich etwa radial erstreckt, wobei das Lager **dadurch gekennzeichnet ist, dass** der Rand (10) in einer Öffnung (9g, 9d) angeordnet ist, indem er ein Spiel ($J_a$) mit einer inneren axialen Wand (12) bildet, wobei Ringe die Öffnung derart begrenzen, dass eine innerer ringförmiger Gang (13a) mit einem Querschnitt $S_a$ gebildet wird, wobei die Lippe (11) einer seitlichen äußeren Fläche (1g, 1d, 2g, 2d) zugewandt angeordnet ist, indem ein Spiel ($J_b$) derart gebildet wird, dass ein äußerer ringförmiger Gang (13b) mit einem Querschnitt $S_b$ gebildet wird, wobei sich der äußere ringförmige Gang ab dem inneren ringförmigen Gang bis zu einem Durchgang (14) erstreckt, um einen Kommunikationsweg des Wälzraums mit der Außenwelt zu bilden, wobei der Durchgang radial entlang der seitlichen äußeren Fläche (1g, 1d, 2g, 2d) bis zur axialen Wand (3, 4) ausmündet.

**2.** Wälzlager nach Anspruch 1, **dadurch gekennzeichnet, dass** die seitliche äußere linke (1g, 2g) und rechte (1d, 2d) Fläche eines Rings (1, 2) mit der äußeren axialen Wand (3, 4) durch eine von einem Verbindungsradius gebildete Krümmung (15) verbunden sind.

**3.** Wälzlager nach einem der Ansprüche 1 oder 2, **dadurch gekennzeichnet, dass** sich die innere axiale Wand (12), die die Öffnung (9g, 9d) begrenzt, ab einer seitlichen äußeren Fläche (1g, 1d, 2g, 2d) in Richtung einer Laufbahn (5, 6) erstreckt, die auf dem entsprechenden Ring (1, 2) ausgebildet ist.

**4.** Wälzlager nach einem der Ansprüche 1 bis 3, **dadurch gekennzeichnet, dass** der Körper (8) zwei Ränder (10), jeweils innen und außen, aufweist, die beide in jeder Öffnung (9g, 9d) angeordnet sind, indem sie jeweils einer inneren axialen Wand (12) radial zugewandt sind, die die Öffnung begrenzt, und auf jedem derselben eine ringförmige Lippe (11) ausgebildet ist, um zwei Kommunikationswege, jeweils innen und außen, zu bilden.

**5.** Wälzlager nach einem der Ansprüche 1 bis 4, **dadurch gekennzeichnet, dass** es zwei Käfige, jeweils links (7g) und rechts (7d) umfasst, von denen jeder mindestens einen Kommunikationsweg, jeweils links und rechts, bildet.

**6.** Wälzlager nach einem der Ansprüche 1 bis 5, **dadurch gekennzeichnet, dass** das Spiel ($J_a$) mindestens gleich 0,5 mm beträgt.

**7.** Wälzlager nach einem der Ansprüche 1 bis 6, **dadurch gekennzeichnet, dass** das Spiel ($J_b$) mindestens gleich 0,15 mm beträgt.

**8.** Wälzlager nach einem der Ansprüche 1 bis 7, **dadurch gekennzeichnet, dass** die Lippe (11) eine radiale Höhe (h) aufweist, die zirka 2 mm beträgt.

**9.** Wälzlager nach einem der Ansprüche 1 bis 8, **dadurch gekennzeichnet, dass** der Querschnitt $S_b$ des äußeren ringförmigen Ganges (13b) zwischen 60 % und 140 % des Querschnitts $S_a$ des inneren ringförmigen Ganges (13a) liegt.

**10.** Wälzlager nach Anspruch 9, **dadurch gekennzeichnet, dass** der Querschnitt $S_b$ des äußeren ringförmigen Ganges (13b) etwa gleich dem Querschnitt $S_a$ des inneren ringförmigen Ganges (13a) ist.

**11.** Wälzlager nach einem der Ansprüche 1 bis 10, **dadurch gekennzeichnet, dass** die innere axiale Wand (12) mit der seitlichen äußeren Fläche (1g, 1d, 2g, 2d) durch eine von einem Verbindungsradius ($R_1$) gebildete Krümmung (16) verbunden ist, wobei die Lippe (11) mit dem Rand durch eine von einem Verbindungsradius ($R_2$) gebildete Krümmung (17) verbunden ist, der derart ist, dass:
$R_2 = R_1 + J_a - x$; wobei x zwischen 0,05 und 0,3 liegt.

**12.** Wälzlager nach Anspruch 11, **dadurch gekennzeichnet, dass** x zwischen 0,15 und 0,2 liegt.

**Claims**

**1.** Roller bearing comprising an outer ring (2) and an inner ring (1) together delimiting a roller space wherein rolling bodies are disposed to allow the relative rotation of said rings, each of said rings having a left-side outer face (1g, 2g) and a right-side outer face (1d, 2d) extending radially by being connected by an outer axial wall (3, 4), the left-side faces (1g, 2g) - respectively right-side (1d, 2d) - being separated by a left-side opening (9g) - respectively right-side (9d) - of the roller space, said bearing further comprising at least one cage (7g, 7d) comprising an annular body (8) which is provided with housings wherein the rolling bodies are disposed to ensure the guiding in rotation thereof, said body having at least one substantially axial edge (10) on which is formed an annular lip (11) which extends substantially radially, said bearing being **characterised in that** the edge (10) is disposed in an opening (9g, 9d) by forming a clearance ($J_a$) with an inner axial wall (12) of said rings delimiting said opening so as to form an inner annular conduit (13a) of cross-section $S_a$, the lip (11) being disposed facing a side outer face (1g, 1d, 2g, 2d) by forming a clearance ($J_b$) so as to form an outer annular conduit (13b) of cross-section $S_b$, said outer annular conduit extending from the inner annular conduit to a passage (14) to form a communication path of the roller space with the exterior, said passage radially leading along the side outer face (1g, 1d, 2g, 2d) to the axial wall (3, 4).

**2.** Roller bearing according to claim 1, **characterised in that** the left-side (1g, 2g) and right-side (1d, 2d) outer faces of a ring (1, 2) are connected to the outer axial wall (3, 4) by a bend (15) formed by a connecting radius.

**3.** Roller bearing according to one of claims 1 or 2, **characterised in that** the inner axial wall (12) delimiting the opening (9g, 9d) extends from a side outer face (1g, 1d, 2g, 2d) to a roller track (5, 6) formed on the corresponding ring (1, 2).

**4.** Roller bearing according to any one of claims 1 to 3, **characterised in that** the body (8) has two respectively inner and outer edges (10), both disposed in each opening (9g, 9d) by each radially facing an inner axial wall (12) delimiting said opening, and on each of which is formed an annular lip (11) to form two respectively inner and outer communication paths.

5. Roller bearing according to any one of claims 1 to 4, **characterised in that** it comprises two respectively left-side (7g) and right-side (7d) cages, each forming at least one respectively left-side and right-side communication path.

6. Roller bearing according to any one of claims 1 to 5, **characterised in that** the clearance ($J_a$) is at least equal to 0.5mm.

7. Roller bearing according to any one of claims 1 to 6, **characterised in that** the clearance ($J_b$) is at least equal to 0.15mm.

8. Roller bearing according to any one of claims 1 to 7, **characterised in that** the lip (11) has a radial height (h) which is of the order of 2mm.

9. Roller bearing according to any one of claims 1 to 8, **characterised in that** the cross-section $S_b$ of the outer annular conduit (13b) is comprised between 60% and 140% of the cross-section $S_a$ of the inner annular conduit (13a) .

10. Roller bearing according to claim 9, **characterised in that** the cross-section $S_b$ of the outer annular conduit (13b) is substantially equal to the cross-section $S_a$ of the inner annular conduit (13a).

11. Roller bearing according to any one of claims 1 to 10, **characterised in that** the inner axial wall (12) is connected to the side outer face (1g, 1d, 2g, 2d) by a bend (16) formed by a connecting radius ($R_1$), the lip (11) being connected to the edge by a bend (17) formed by a connecting radius ($R_2$) which is such that:
$R_2 = R_1 + J_a - x$; x being comprised between 0.05 and 0.3.

12. Roller bearing according to claim 11, **characterised in that** x is comprised between 0.15 and 0.2.

Fig. 1

Fig. 2

**RÉFÉRENCES CITÉES DANS LA DESCRIPTION**

**Documents brevets cités dans la description**

- FR 2883942
- JP 2014005913 A